# EUROPEAN PATENT APPLICATION

(11) **EP 1 119 132 A2**
(43) Date of publication of application: **25.07.2001**
(21) Application number: 01101074.1
(22) Date of filing: 18.01.2001
(51) Int. Cl.: H04L 9/08

(54) **Broadcasting encrypted messages using session keys**

(30) Priority: 19.01.2000 US 487863
(71) Applicant: Research In Motion Limited, Waterloo, Ontario N2L 3W8 (CA)
(72) Inventor: Little, Herb A., Waterloo, Ontario N2T 1Z9 (CA); Hind, Hugh R., Georgetown, Ontario L7G 1H3 (CA)
(74) Representative: Winter, Brandl, Fürniss, Hübner, Röss, Kaiser, Polte Partnerschaft

(57) **Abstract**

A system and method for sending encrypted information to multiple recipients is provided. Information such as a message or data to be sent to multiple recipients is encrypted using a selected session key, thereby generating a first encrypted message. The session key is then encrypted with each of a plurality of unique secrets respectively associated with the multiple recipients to thereby generate a plurality of encrypted session keys. The encrypted message and the plurality of encrypted session keys are combined in a second encrypted message, which is transmitted to the multiple recipients. Each of the multiple recipients searches the encrypted message for an encrypted session key which was encrypted with its associated unique secret, decrypts the encrypted session key to retrieve the session key and decrypts an encrypted message using the retrieved session key.

## Description

### FIELD OF THE INVENTION

The present invention relates generally to the field of data encryption. In particular, the invention relates to a system for broadcasting encrypted data to multiple recipients.

### BACKGROUND OF THE INVENTION

Encryption involves encoding a message using a small secret in such a way that an entity knowing the secret can recover the message, while an entity that does not know the secret cannot recover the message in a reasonable amount of time. There are well-known encryption schemes that enable a single sender to encrypt a message for a single recipient provided the sender and the recipient share a secret. These schemes, however, are not well adapted to situations where a single sender desires to send an encrypted message to multiple recipients.

PGP and SMIME are the most common email techniques used for encrypting Internet email messages. The usual approach taken when the same message is sent to more than one recipient is to encrypt the message multiple times. First, the message is encrypted using a secret shared between the sender and the first recipient and then the encrypted message is sent to the first recipient. Next, the sender encrypts the message a second time for a second recipient using a secret shared between the sender and the second recipient and sends the second encrypted message. This process is repeated until the message has been encrypted for each intended recipient using the unique secret shared between that intended recipient and the sender and the encrypted messages have been transmitted. In a communication environment where bandwidth (information channel capacity) is limited, such as in a wireless communications environment, sending multiple versions of the same message wastes resources, is very costly, highly inefficient and very slow. Additionally, data terminals, such as cellphones, PDAs and two-way pagers, communicating via wireless communications networks tend to have considerably less processing power than typical data terminals, such as desktops and workstations, connected to the Internet; hence, multiple re-encryption associated with traditional encryption methodologies pose significant processing power demand on wireless data terminals, which is undesirable.

Therefore, there remains a need in this art for a more efficient method for sending the same encrypted message to multiple recipients. There remains a more particular need for a system that allows a sender to broadcast an encrypted message a single time for receipt by multiple intended recipients whereby each intended recipients can decrypt the message and an unintended recipient will be impeded in its effort to decrypt the message.

### SUMMARY OF THE INVENTION

The present invention overcomes the problems noted above and satisfies the need in this field for a system that allows a sender to broadcast an encrypted message a single time for receipt and decryption by multiple intended recipients.

The present invention has many advantageous features. Not all of these features are simultaneously required to practice the invention as claimed, and the following list is merely illustrative of the types of benefits that may be provided, alone or in combination, by the present invention. These advantages include: (1) bandwidth savings through the use of the system; (2) the system's adaptability to different mail address types; (3) providing a mechanism by which all intended recipients can decrypt the message while impeding the efforts of unintended recipients from decrypting the message; (4) providing a system in which information about an intended recipient's secret or decryption key is not leaked to another intended recipient or to any other individual; and (5) the system's flexibility which allows its use with both public key (asymmetric), private key (symmetric) encryption schemes or some hybrid combination thereof.

In the invention, a system for sending encrypted information to multiple recipients comprises means for selecting a session key, information encrypting means for encrypting information using the session key to thereby generate an encrypted message, key encrypting means for generating a plurality of encrypted session keys by encrypting the session key using each of a plurality of unique keys associated with the multiple recipients, means for assembling the encrypted message and the plurality of encrypted session keys into a single transmission message, and a transmitter for transmitting the transmission message.

In accordance with a further aspect of the present invention, a device for sending encrypted data to multiple recipients is provided. The device comprises a message recorder, an encryptor, and a transmitter. The message recorder is operative to store a message to be sent to a first recipient and to a second recipient. The encryptor is operative to select a session key, encrypt the message using the session key thereby generating a first encrypted message, encrypt the session key with a first secret thereby generating a first encrypted session key, encrypt the session key with a second secret thereby generating a second encrypted session key, and generate a second encrypted message comprising the first encrypted session key, the second encrypted session key and the first encrypted message. The transmitter is operative to transmit the second encrypted message.

A method according to an aspect of the invention encrypts a message to be sent by a sender to multiple recipients and comprises the steps of acquiring a session key, encrypting the message using said session key to generate a first encrypted message, encrypting said session key using a first secret thereby generating a first encrypted session key, encrypting said session key using a second secret thereby generating a second encrypted session key, and broadcasting an outgoing message comprising said first encrypted message, said first encrypted session key, and said second encrypted session key.

The invention also provides a device for decrypting a message broadcasted to a plurality of receivers, the device comprising means for receiving the broadcasted message, means for searching a plurality of encrypted session keys in the broadcasted message to locate a particular encrypted session key, key decrypting means for decrypting the particular encrypted session key, and information decrypting means for decrypting a portion of the received message using the session key. A related method for decrypting a message by a recipient comprises the steps of acquiring an encrypted message, searching said encrypted message for a first encrypted session key, decrypting said first encrypted session key to retrieve a session key, and decrypting a message block in said encrypted message using said retrieved session key.

According to a further preferred embodiment of the invention, a method for encrypting a message to be sent by a sender to multiple recipients comprises the steps of acquiring a session key, encrypting the message using the session key to generate a first encrypted message, encrypting the session key using a first secret thereby generating a first encrypted session key, encrypting the session key using a second secret thereby generating a second encrypted session key, encrypting the session key using a third, fourth, ..., n-th secret thereby generating a third, fourth, ..., n-th encrypted session key, respectively; and broadcasting an outgoing message comprising the first encrypted message, the first encrypted session key, and, the second, third, fourth,..., n-th encrypted session keys.

The devices and methods in accordance with the invention may be implemented as hardware, computer software or a combination of both hardware and software.

The keys or secrets used to encrypt the session key may be secret information shared between the sender or transmitter and each intended receiver. Encryption of the session key in such embodiments involves applying a cipher algorithm, such as a data encryption standard (DES) algorithm, to the session key. The session key encrypting keys may instead be public keys generated by each of the multiple recipients and stored in a central key repository accessible to the sender. Each of the intended multiple recipients stores a private key corresponding to its unique public key and is adapted to decrypt one of the plurality of encrypted session keys to thereby recover the session key.

The second encrypted message may further comprise a plurality of globally unique identifications, each of the identifications associating a particular encrypted session key to an intended recipient. An intended recipient then locates its corresponding particular encrypted session key by searching the identifications.

The transmitters and receivers in which implementation of the invention is contemplated include, but are in no way limited to, wireless communication devices, the two-way communication devices, pagers, handheld wireless Internet appliances, rf transmitters and receivers, wired and wireless modems, cellular telephones, communication-enabled personal digital assistants (PDAs) and broadcasting and subscriber arrangements in subscription broadcast systems such as pay television systems.

### BRIEF DESCRIPTION OF THE DRAWINGS

The present invention will become apparent from the following description when read in conjunction with the accompanying drawings wherein:
FIG. 1 illustrates in block diagram form a system in which the principles of the present invention may be practiced;
FIG. 2 illustrates in flow diagram form a preferred algorithm for implementing an encryption method according to present invention;
FIG. 3 illustrates in flow diagram form a preferred algorithm for implementing a decryption method according to present invention;
FIG. 4 illustrates an exemplary generalized encrypted message block generated in accordance with the present invention;
FIG. 5 illustrates a more specific exemplary encrypted message block generated in accordance with the present invention;
FIG. 6 illustrates another example of the application of the present invention in a pay-per-use data communication broadcast; and,
FIG. 7 illustrates in flow diagram form a preferred algorithm for the method of FIG. 2 as applicable for an n-plurality of recipients.

### DETAILED DESCRIPTION OF THE PREFERRED EMBODIMENT

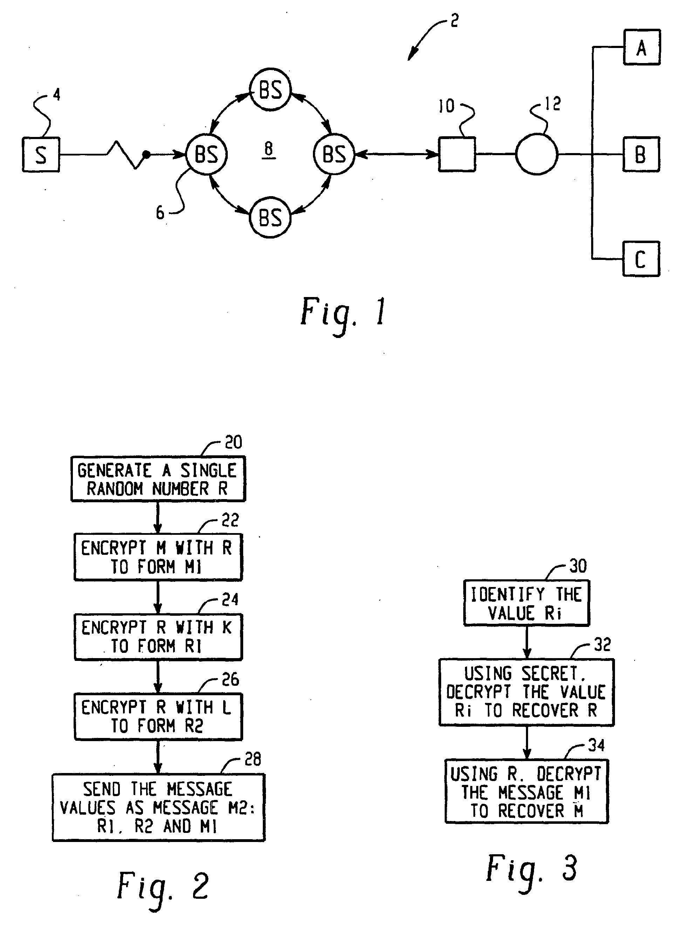

Referring now to the drawings, Figure 1 sets forth generally a system **2** in which the present invention is useful. The inventive method allows a sender **S** to transmit a single encrypted message to multiple intended recipients through normal communication channels and provides each intended recipient with the ability to decrypt the encrypted message using a unique secret that that intended recipient shares with the sender **S**. A typical system for which the present invention is useful is a low bandwidth system such as one that utilizes an RF link in the communication path. Email or data communication systems having message packaging and redirection management being operative may also utilize the present invention. An example of such a system is set forth in co-pending United States Patent Application No. 09/087,623 titled "System and Method for Pushing Information From a Host System to a Mobile Data Communication Device". The system and method for pushing information from a host system to a mobile device described therein is a preferred system and method for the present invention herein; however, it is to be understood other types of systems and methods could be implemented that utilizes the present invention.

In accordance with a preferred embodiment of the present invention, a sender S transmits an encrypted message once using a transmission device **4**, such as a cellphone, PDA or two-way pager, to a base station **6** that is part of a communication network **8**. The message is forwarded through the communication network **8** to a gateway device **10**. The gateway device **10** transfers the message from the network **8** to a wide area network **12** such as the Internet. Intended recipients **A** and **B** through their respective Internet connection method receive the message transmitted by the sender **S**.
The intended recipients **A** and **B** then, using the decryption method of the present invention, decrypt the message. An unintended recipient **C**, who may intercept the message, however is impeded from deciphering the message because the unintended recipient **C** lacks a secret to decrypt the message. An important advantage of the inventive method is that by only sending the message once bandwidth is saved. It is be understood that although the description herein generally refers to the present invention in application with messages, specifically email messages, the present invention in no way is limited to the application of such messages, but may include any form of data communication or datagram that requires secure transmission to the intended recipients.

The preferred transmission device **4** comprises a message recorder, an encryptor, and a transmitter. The device circuit is preferably configured to operate as a wireless transceiver, such as a two paging computer, a portable electronic messaging device or a hand-held email client. An example of such a device is set forth in co-pending United States Patent Application No. 09/106,585 titled "Hand-Held Electronic Device With A Keyboard Optimized for Use With the Thumbs". Although this is a preferred circuit for such a device, other types of circuits could be utilized in the present invention.

The message recorder is operative to store the message that is to be sent to a plurality of intended message recipients. The message recorder could comprise a memory element such as RAM, a tape storage element, a disk storage medium, CD ROM storage medium or other mediums capable of use for storing a message entered by a sender. The message could be in a number of forms such as text, voice or others.

The encryptor is operative to encrypt the message thereby generating a first encrypted message. The encryptor could be composed of a number of different devices such as a microprocessor or other digital circuit, or could reside in programming that performs the encryption steps. In a preferred embodiment of the present invention, the encryptor is software residing in the device 4. The encryptor performs the encryption function by (1) selecting a session key, (2) encrypting the message using the session key thereby generating the first encrypted message and (3) encrypting the session key multiple times. This latter step (3) involves the encryptor encrypting the session key once using each secret that the sender shares with the intended recipients thereby generating multiple encrypted session keys. The encryptor also at step (4) performs another encryption step thereby generating a second encrypted message which comprises all encrypted session keys and the first encrypted message. A more detailed description of the encryption algorithm is discussed below.

The transmitter is operative to transmit the second encrypted message. The transmitter could comprise a number of different devices such as an rf transmitter, a modem, an optical transmitter, and others that are capable of forwarding the encrypted message to a network so that it can be routed to the intended recipients.

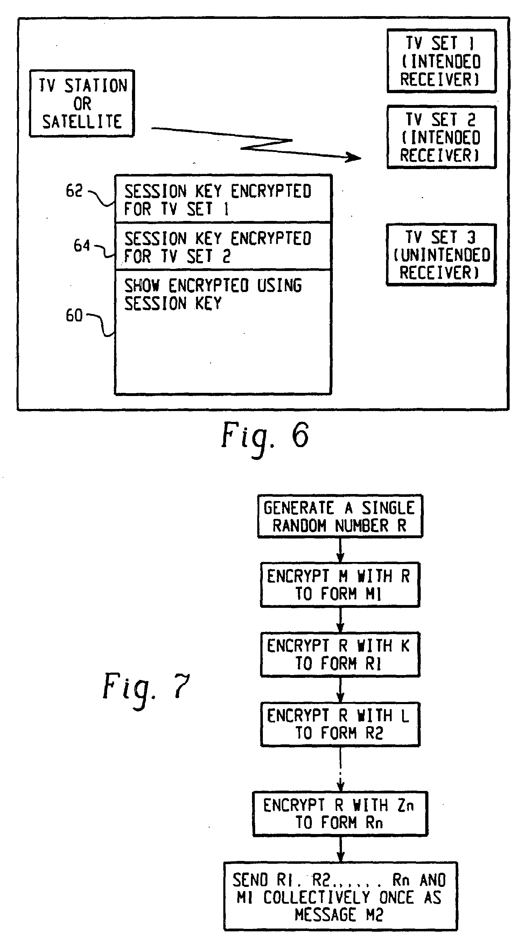

An exemplary transmission device **4** is a two-way communications device such as a cell phone, two-way pager or PDA but other devices such a pay-per-view television broadcast station or satellite could be used as shown in Figure 6. In the pay-per-view television broadcast embodiment, a television show **60** to be broadcasted is encrypted once with a single randomly generated session key. Sometime before the encrypted show is to be broadcast, the session key is encrypted once for each paying customer and these (suitably labeled) encrypted session keys **62, 64** broadcast. Paying customers would be able to acquire the session key by monitoring the list of encrypted versions of the session key, identifying the version encrypted using their master key, then decrypting the value. Hence, the show could then be broadcast once in encrypted form. Although shown in Fig. 6 and described in conjunction with a pay-per-view television system, the invention may also be implemented in other subscriber type broadcast systems.

An exemplary algorithm for sending an encrypted message according to one aspect of the invention is illustrated in flow chart form in Figure 2. In the preferred system, the sender **S** and a first intended recipient **A** share a secret **K**, and the sender **S** and a second intended recipient **B** share a secret **L**. In this preferred system, the first intended recipient **A** does not know the secret **L** and the second intended recipient **B** does not know the secret **K**. Finally, in this preferred system an unintended recipient **C** does not know the secret **K** or the secret **L**.

First, the sender **S** generates a random number to use as a session key **R** at step **20**. At this point the randomly chosen session key **R** is only known to the sender **S**. The sender **S**, then, encrypts a message **M** once using the randomly chosen session key **R** to generate an encoded message **M1** at step **22.** Next, the sender **S** encrypts the session key R repeatedly using each intended recipient's secret. The sender **S**, first, encrypts the session key **R** using the secret **K** to generate a first encoded session key **R1** at step **24** and then encrypts the session key **R** using the secret **L** to generate a second encoded session key **R2** at step **26.** It will be apparent to those skilled in the art that the cipher algorithm used to encrypt the session key is preferably a cipher believed to be secure against plaintext attacks. DES (data encryption standard), triple-DES are two such known ciphers, although any cipher algorithms which guard against plaintext attacks may be used to encrypt the session key in accordance with the invention.

Finally, the sender S transmits an encoded message **M2** which comprises a single copy of the encoded message **M1,** a copy of the first encoded session key **R1,** and a copy of the second encoded session key **R2** at step **28.** Optionally, a sender **S** could also include in the encoded message **M2** a copy of an ID for each intended recipient to assist each intended recipient in identifying the encoded session key generated for the specific intended recipient. This system has been described in terms of a single sender **S** and two intended recipients A and **B.** However, one skilled in the art could modify the system for use with any number of recipients as illustrated in Fig. 7.

An exemplary algorithm for decrypting the message **M1** according to another aspect of the invention is illustrated in flow chart form in Figure 3. To decrypt the message **M1**, the intended recipients **A** and **B** use their secrets, **K** and **L,** respectively, to decrypt the encrypted session keys **R1** and **R2,** respectively, to decrypt and recover the session key **R.** The intended recipients **A** and **B** then use the randomly chosen session key **R** to decrypt and recover the message **M**. Specifically, recipient **A** identifies the encrypted session key **R1** at step **30.** Recipient **A** then uses the shared secret **K** to decrypt and recover the randomly chosen session key **R** from the first encoded session key **R1** at step **32.** Recipient **A** then uses the randomly chosen session key **R** to decrypt the message **M1** to generate the original message **M** at step **34**. Recipient **B** decrypts the message **M1** in a similar manner. First, recipient **B** identifies the encrypted session key **R2** at step **30**. Recipient **B** then uses the shared secret **L** to recover the randomly chosen session key **R** from the second encoded session key **R2** at step **32**. Recipient **B** then uses the randomly chosen session key **R** to decrypt the message **M1** to generate the original message **M** at step **34.**

An unintended recipient **C** who does not know either **K** or **L** cannot use either the first encoded session key **R1** or the second encoded session key **R2** to recover the randomly chosen session key **R**. Without the knowledge of the randomly chosen session key **R**, the unintended recipient **C** will be impeded in its effort to decrypt the message **M1** to recover the message **M**. Although both **A** and **B** decrypt the session key and also have access to an encrypted key destined for the other intended recipient, the cipher used to encrypt the session key **R** is preferably a cipher which is believed to be secure against a plaintext attack, as described above, and thereby prevents **A** or **B** from determining the secret of the other recipient. In systems with greater than two intended recipients, all recipients are similarly unable to determine the secret shared between other stations and the sender.

The algorithm for decrypting the message **M1** optionally could include the following technique to assist recipient **A** in identifying the encrypted session key **R1** and recipient **B** in identifying the encrypted session key **R2.** This technique is made clear in the discussion below describing the format of the transmitted message.

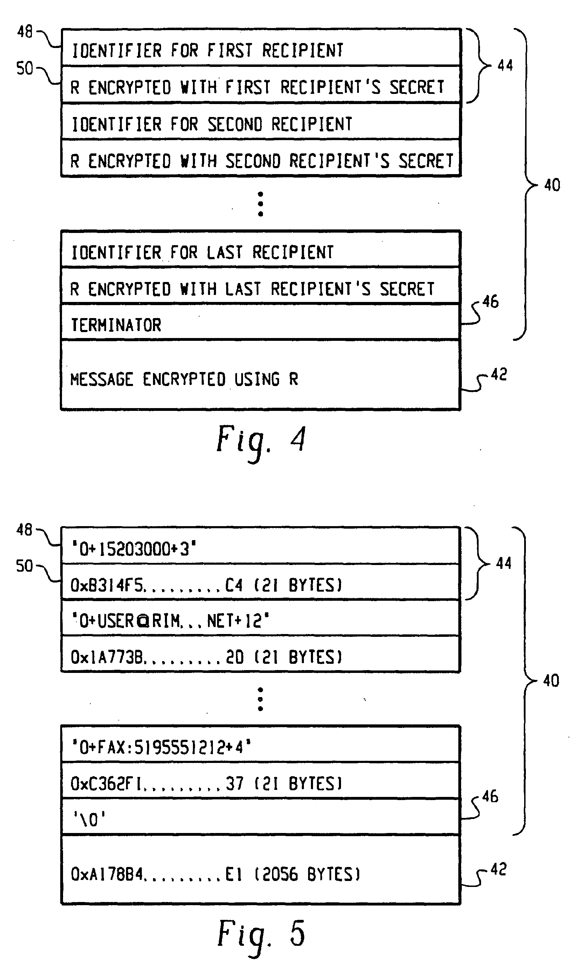

Figure 4 illustrates in block diagram form an exemplary, generalized encrypted message block that could be generated using the present invention. The exemplary message block comprises a header section **40** and a data section **42.** The exemplary header section comprises a secret identifier block **44** for each intended recipient and a terminator block **46.** Each secret identifier block **44** includes an identifier field **48** for the recipient and an encoded session key field **50** for the recipient. The identifier field **48** contains a globally unique identifier for the intended recipient to which that secret identifier block **44** is addressed. The encoded session key field **50** includes the encoded session key that has been encrypted using the secret of the intended recipient to which that block is addressed.

The inclusion of a secret identifier block **44** with each encrypted secret allows each intended recipient to immediately identify which encrypted header block should be decrypted to retrieve the value **R** used to encrypt the message. An example of a data block that has been generated according to one aspect of the present invention is shown in Figure 5.

While the present invention has been described with reference to a symmetric key scheme, one skilled in the art would recognize that the present invention could be applied in both a symmetric key scheme and in a public key scheme. In a symmetric key scheme, for each pair comprising the sender and a recipient, there is a common master key known to both parties. In a symmetric key implementation, the shared secret referred to in the present invention is the master key known to both the sender and a single intended recipient. The session key can thus be passed from the sender to the recipient by encrypting the session key with the shared master key (for that recipient) and attaching the encrypted session key to the encrypted message. A suitable identifier is required so that the recipient can identify which version of the session key should be decrypted with its master key.

The present invention also works when used with a public key scheme. In a public key scheme, each party (sender and recipients) generates a public key/private key pair. The public key is published (made available globally) by placing it into a database (commonly known as a certificate authority). The corresponding private key is kept secret by the party that generated the pair. The fundamental idea behind a public key scheme is that (a) there is no way to derive the private key simply from knowledge of the public key, and (b) data encrypted by one key of the pair can only be decrypted using the other key of the pair. In order to exchange a session key, the sender encrypts the session key with the public key of the intended recipient. The intended recipient is the only party with access to the corresponding private key that can be used to decrypt, and thus recover, the session key. The "shared secret" referred to in the present invention is thus the combination of the senders knowledge of the recipient's public key and the recipient's knowledge of the corresponding private key. This invention only requires the ability to pass a session key from the sender to the intended recipients.

The bandwidth saving the can be achieved through the use of the present invention can be illustrated using the following example. For illustrative purposes, it can be assumed that a piece of encrypted data has the same size as the original (unencrypted) data. Therefore, a transmitted encrypted message **M2** is approximately equal to twice the size of the randomly chosen session key **R** plus the size of the encrypted message **M1.** Using example sizes of randomly chosen session key **R** being 20 bytes and the encrypted message **M1** being 2048 bytes, this yields a transmitted encrypted message **M2** of 2 x 20 + 2048 = 2088 bytes. On the other hand, if the encrypted message **M1** were sent twice, once to recipient **A** and once to recipient **B** as is done in the prior art methods, the size of the encrypted messages sent would be 2 x 2048 = 4096 bytes.

The present invention has the following additional advantages. The present invention provides a system whereby an unintended recipient **C** is impeded from recovering the message **M** and prevented from learning anything about secrets **K** or **L**. Intended recipients are also prevented from learning anything about secrets shared between the sender and other recipients. The present invention also provides a system with the capability to send an encrypted message to recipients having different address types.

Having described in detail the preferred and alternate embodiments of the present invention, including the preferred modes of operation, it is to be understood that the invention is capable of other and different embodiments, its several details are capable of modifications in various respects, and its operation could be carried out with different elements and steps, all without departing from the spirit of the invention. The drawings and description of the preferred and alternate embodiments are presently only by way of example and are be regarded as illustrative in nature and are not meant to limit the scope of the present invention which is defined by the following claims.

## Claims

1. A system for sending encrypted information to multiple recipients comprising:
means for selecting a session key;
information encrypting means for encrypting information using the session key to thereby generate an encrypted message;
key encrypting means for generating a plurality of encrypted session keys by encrypting the session key using each of a plurality of unique keys associated with the multiple recipients;
means for assembling the encrypted message and the plurality of encrypted session keys into a single transmission message; and
a transmitter for transmitting the transmission message.

2. The system according to claim 1, wherein each of the plurality of unique keys is a public key generated by one of the multiple recipients.

3. The system according to claim 2, wherein the plurality of unique keys is stored in a central key repository accessible to the means for generating a plurality of encrypted session keys.

4. The system according to claim 2, wherein:
each of the multiple recipients stores a private key corresponding to its unique public key and is adapted to decrypt one of the plurality of encrypted session keys to thereby recover the session key.

5. The system according to claim 1, wherein each of the plurality of unique keys is a secret shared between the system for sending encrypted information and one of the multiple recipients.

6. The system according to claim 5, wherein the key encrypting means encrypts the session key by applying a cipher algorithm.

7. The system according to claim 6, wherein the cipher algorithm is a data encryption standard (DES) algorithm.

8. The system according to claim 3, wherein the transmitter is a wireless transmitter.

9. A device for sending encrypted data to multiple recipients comprising:
a message recorder that is operative to store a message to be sent to a plurality of recipients;
an encryptor that is operative to:
select a random session key,
encrypt the message using the random session key thereby generating a first encrypted message,
produce a plurality of encrypted session keys each of which comprises the random session key encrypted with a secret unique to a respective recipient, and
generate a second encrypted message comprising the plurality of encrypted session keys and the first encrypted message; and
a transmitter that is operative to transmit the second encrypted message.

10. The device according to claim 9 wherein the second encrypted message further comprises:
a plurality of globally unique identifications, each of the identifications to associate the encrypted session key to the intended recipient.

11. The device according to claim 9 wherein the device is a two-way communications device.

12. The device according to claim 9 wherein the device is a pager.

13. The device according to claim 9 wherein the device is a handheld wireless Internet appliance.

14. The device according to claim 9 wherein said transmitter is an rf transmitter.

15. The device according to claim 9 wherein said transmitter is a modem.

16. A method for encrypting a message to be sent by a sender to multiple recipients comprising the steps of:
acquiring a session key;
encrypting the message using said session key to generate a first encrypted message;
encrypting said session key using a first secret thereby generating a first encrypted session key;
encrypting said session key using a second secret thereby generating a second encrypted session key; and
broadcasting an outgoing message comprising said first encrypted message, said first encrypted session key, and said second encrypted session key.

17. The method according to claim 16 wherein each of the steps of encrypting the session key comprises the step of applying a cipher algorithm to the session key.

18. The method according to claim 16 wherein said step of acquiring a session key comprises the step of selecting a random number to use as said session key.

19. The method according to claim 16 wherein said first secret is a secret shared between the sender and a first intended recipient of said outgoing message and said second secret is a secret shared between the sender and a second intended recipient of said outgoing message.

20. The method according to claim 16 wherein said outgoing message further comprises:
a first globally unique identification for a first intended recipient; and
a second globally unique identification for a second intended recipient.

21. A method for encrypting a message to be sent by a sender to multiple recipients comprising the steps of:
acquiring a first globally unique identification for a first intended recipient;
acquiring a first secret wherein said first secret is a secret shared between the sender and the first intended recipient;
acquiring a second globally unique identification for a second intended recipient;
acquiring a second secret wherein said second secret is a secret shared between the sender and the second intended recipient;
acquiring a random session key;
encrypting the message using said session key to generate a first encrypted message;
encrypting said session key using a first secret thereby generating a first encrypted session key;
encrypting said session key using a second secret thereby generating a second encrypted session key; and
broadcasting an outgoing message comprising: said first globally unique identification, said first encrypted session key, said second globally unique identification, said second encrypted session key, and said first encrypted message.

22. A device for decrypting a message broadcasted to a plurality of receivers, the device comprising:
means for receiving the broadcasted message;
means for searching a plurality of encrypted session keys in the broadcasted message to locate a particular encrypted session key;
key decrypting means for decrypting the particular encrypted session key; and
information decrypting means for decrypting a portion of the received message using the session key.

23. The device according to claim 22, wherein the device is a wireless communication device.

24. The device according to claim 22, wherein the device is a modem.

25. The device according to claim 24, wherein the device is a wireless modem.

26. The device according to claim 22, wherein the device is a cellular telephone.

27. The device according to claim 22, implemented in a subscriber receiver in a pay television system.

28. A method for decrypting a message by a recipient comprising the steps of:
acquiring an encrypted message;
searching said encrypted message for a first encrypted session key;
decrypting said first encrypted session key to retrieve a session key; and
decrypting a message block in said encrypted message using said retrieved session key.

29. The method of claim 28 wherein said step of decrypting said first encrypted session key comprises the step of using a secret shared with the sender of the message to decrypt said first encrypted session key.

30. The method of claim 28 wherein said step of searching said encrypted message comprises the steps of: locating a globally unique identification that corresponds to the recipient and locating a first encrypted session key that corresponds to said globally unique identification.

31. A method for a single recipient to decrypt a message broadcasted to multiple recipients comprising the steps of:
acquiring the broadcasted message;
locating in the message a globally unique identification that corresponds to the recipient;
locating a first encrypted session key that corresponds to said globally unique identification;
decrypting said first encrypted session key to retrieve a session key using a secret shared with the sender of the broadcasted message; and
decrypting a message block in the broadcasted message using said retrieved session key.

32. A method for exchanging encrypted messages between a sender and a first intended recipient and the sender and a second intended recipient comprising the steps of:
acquiring a random session key;
encrypting a message using said session key to generate a first encrypted message;
encrypting said session key using a first secret shared between the sender and the first intended recipient thereby generating a first encrypted session key;
encrypting said session key using a second secret shared between the sender and the second intended recipient thereby generating a second encrypted session key;
broadcasting an outgoing message comprising: a first globally unique identification for the first intended recipient, said first encrypted session key, a second globally unique identification for the second intended recipient, said second encrypted session key, and said first encrypted message;
acquiring said broadcasted outgoing message by the first intended recipient;
locating in the message said first globally unique identification;
locating said first encrypted session key that corresponds to said first globally unique identification;
decrypting said first encrypted session key to retrieve said session key using said first secret; and
decrypting a message block in said broadcasted message using said retrieved session key.

33. The method of claim 32 further comprising the steps of:
acquiring said broadcasted outgoing message by the second intended recipient;
locating in the message said second globally unique identification;
locating said second encrypted session key that corresponds to said second globally unique identification;
decrypting said second encrypted session key to retrieve said session key using said second secret; and
decrypting a message block in said broadcasted message using said retrieved session key.

34. A device for sending encrypted data to multiple recipients comprising:
a message recorder that is operative to store a message to be sent to at least a first recipient and a second recipient;
an encryptor that is operative to select a random session key, encrypt the message using the random session key thereby generating a first encrypted message, encrypt the session key with a first secret thereby generating a first encrypted session key, encrypt the session key with a second secret thereby generating a second encrypted session key, and generate a second encrypted message comprising the first encrypted session key, the second encrypted session key and the first encrypted message; and
a transmitter that is operative to transmit the second encrypted message.

35. A method for encrypting a message to be sent by a sender to n recipients comprising the steps of:
(1) acquiring a session key;
(2) encrypting the message using the session key to generate a first encrypted message;
(3) encrypting the session key using a secret associated with a recipient thereby generating an encrypted session key;
(4) repeating step (3) n-1 times thereby generating a plurality of unique encrypted session keys; and
(5) broadcasting an outgoing message comprising the plurality of encrypted session keys and the encrypted message.

36. The method according to claim 34 wherein the step of acquiring a session key comprises the step of selecting a random number to use as the session key.

37. The method according to claim 35 wherein the secret is a secret shared between the sender and the recipient who is the intended decryptor of the encrypted session key.

38. The method according to claim 36 wherein the outgoing message further comprises a plurality of globally unique identifications wherein each unique encrypted session key has a globally unique identification associated therewith.

39. A computer-readable medium storing statements or instructions which, when executed by a processor operatively associated with an information source, perform the functions of:
selecting a session key;
encrypting information using the session key to thereby generate encrypted information;
for each of a plurality of intended receivers to which the information is to be sent, encrypting the session key using a unique secret associated with each intended receiver, to thereby generate a plurality of encrypted session keys; and
combining the encrypted information and the plurality of encrypted session keys into a single message for transmission to the plurality of intended receivers.

40. The computer-readable medium according to claim 39, wherein:
the information source is operatively associated with a communication signal transmitter coupled to a communication network; and
the medium stores further statements or instructions which when executed perform the function of broadcasting the message on the communication network via the transmitter.

41. A computer-readable medium storing statements or instructions which, when executed in a processor operatively associated with a communication signal receiver, performs the functions of:
searching a plurality of encrypted session keys in a received message for a particular encrypted session key;
upon detecting the particular encrypted session key, decrypting the particular encrypted session key; and
decrypting a portion of the received message using the session key.

42. A computer program product comprising:
a first computer-readable medium operatively associated with a transmitter and storing statements or instructions which, when executed, perform the functions of:
encrypting information using a session key to thereby generate encrypted information;
encrypting the session key using a unique secret associated with an intended receiver to which the encrypted information is to be transmitted;
repeating the function of encrypting the session key for each of a plurality of intended receivers to which the information is to be transmitted, using a respective unique secret associated with each intended receiver, to thereby generate a plurality of encrypted session keys; and
combining the encrypted information and the plurality of encrypted session keys into a single message for transmission to the plurality of intended receivers, and
a second computer-readable medium operatively associated with a receiver and storing statements or instructions which, when executed, perform the functions of:
searching a plurality of encrypted session keys in a received message for a particular encrypted session key;
upon detecting the particular encrypted session key, decrypting the particular encrypted session key; and
decrypting an encrypted information portion of the received message using the session key.
